# DEMANDE DE BREVET EUROPEEN

(11) **EP 2 373 114 A1**
(43) Date de publication de la demande: **05.10.2011**
(21) Numéro de dépôt: 11157940.5
(22) Date de dépôt: 11.03.2011
(51) Int. Cl.: H04W 76/02, H04W 12/08

(54) **Équipement et procédé d'accès à distance géré par un réseau mobile à un réseau privé**

(30) Priorité: 12.03.2010 FR 1001008
(71) Demandeur: Alcatel Lucent, 75007 Paris (FR)
(72) Inventeur: Vittone, Pascal, 78141, Velizy (FR)
(74) Mandataire: Mouney, Jérôme

(57) **Abrégé**

La présente invention concerne un procédé de gestion des transmissions de données entre un terminal utilisateur connecté à un réseau mobile géré par un opérateur et un réseau client privé connecté audit réseau mobile par l'intermédiaire d'un équipement d'accès dédié localisé chez le client, ledit procédé comprenant les étapes suivantes:
- identification par le réseau de coeur du réseau mobile d'un équipement d'accès dédié comme étant rattaché au réseau client privé correspondant,
- création d'un champ de souscription supplémentaire dans l'identification des terminaux utilisateurs au niveau du réseau de coeur du réseau mobile définissant le statut d'autorisation d'accès d'un terminal utilisateur à un réseau client privé,
- enregistrement d'au moins un terminal utilisateur du réseau client privé, ledit terminal étant rattaché au réseau mobile, comme étant autorisé à l'accès dudit réseau client privé, ledit terminal utilisateur enregistré ayant alors un statut d'autorisation d'accès vis à vis dudit réseau client privé défini comme autorisé,
lorsqu'un terminal utilisateur requiert un accès à distance à un réseau client privé,
- vérification par le réseau de coeur du réseau mobile d'au moins un identifiant de l'équipement d'accès dédié correspondant audit réseau client privé pour lequel l'accès est demandé et d'au moins un identifiant du terminal utilisateur ayant émis la requête d'accès,
- vérification par le réseau de coeur du statut d'autorisation d'accès du terminal identifié vis à vis du réseau client privé correspondant à la requête,

si le statut d'autorisation d'accès du terminal est défini comme autorisé,
- établissement d'une connexion à distance, par l'intermédiaire du réseau mobile et de l'équipement d'accès dédié, entre ledit terminal utilisateur et le réseau client privé, ladite connexion à distance étant entièrement gérée par le réseau mobile, sinon la requête est rejetée et l'accès au réseau client privé est refusé.

## Description

La présente invention concerne le domaine des réseaux de télécommunication et en particulier les connexions à distance entre les terminaux utilisateurs et les réseaux clients privés.

Les réseaux clients privés peuvent être des réseaux d'entreprises ou plus simplement des réseaux privés domestiques de particuliers qui peuvent se limiter à un unique équipement fixe. Par ailleurs, ces réseaux clients privés sont généralement connectés à d'autres réseaux de communication, comme par exemple Internet ce qui permet d'échanger des informations avec des entités extérieures au réseau client privé. Néanmoins, les gestionnaires de ces réseaux clients privés veulent généralement conserver le caractère privé de ces réseaux et donc limiter l'accès aux données stockées sur ce réseau ou les communications aux personnes autorisées à accéder au réseau, les échanges de données internes au réseau client privé doivent donc être sécurisés vis à vis des utilisateurs externes.

Les développements récents visent donc à permettre à un terminal utilisateur mobile de se connecter à distance et de manière sécurisée à un réseau client privé par l'intermédiaire de réseaux publics.

Dans l'état de la technique, une telle connexion sécurisée requiert la mise en place, au niveau de l'accès du réseau client privé et du terminal utilisateur, de logiciels permettant d'établir un réseau privé virtuel, correspondant à un tunnel entre le terminal et le réseau client privé dans lequel les données échangées sont encapsulées.

Néanmoins, une telle mise en place peut se révéler fastidieuse et difficile à gérer notamment pour un particulier.

La nécessité est donc de proposer une méthode simple qui permette d'établir une connexion sécurisée à distance entre un terminal utilisateur mobile et un réseau client privé.

Ainsi, la présente invention concerne un procédé de gestion des transmissions de données entre un terminal utilisateur connecté à un réseau mobile géré par un opérateur et un réseau client privé connecté audit réseau mobile par l'intermédiaire d'un équipement d'accès dédié localisé chez le client, ledit procédé comprenant les étapes suivantes:
- identification par le réseau de coeur du réseau mobile d'un équipement d'accès dédié comme étant rattaché au réseau client privé correspondant,
- création d'un champ de souscription supplémentaire dans l'identification des terminaux utilisateurs au niveau du réseau de coeur du réseau mobile définissant le statut d'autorisation d'accès d'un terminal utilisateur à un réseau client privé,
- enregistrement d'au moins un terminal utilisateur du réseau client privé, ledit terminal étant rattaché au réseau mobile, comme étant autorisé à l'accès dudit réseau client privé, ledit terminal utilisateur enregistré ayant alors un statut d'autorisation d'accès vis à vis dudit réseau client privé défini comme autorisé,
   lorsqu'un terminal utilisateur requiert un accès à distance à un réseau client privé,
   - vérification par le réseau de coeur du réseau mobile d'au moins un identifiant de l'équipement d'accès dédié correspondant audit réseau client privé pour lequel l'accès est demandé et d'au moins un identifiant du terminal utilisateur ayant émis la requête d'accès,
   - vérification par le réseau de coeur du statut d'autorisation d'accès du terminal identifié vis à vis du réseau client privé correspondant à la requête,
   si le statut d'autorisation d'accès du terminal est défini comme autorisé,
   - établissement d'une connexion à distance, par l'intermédiaire du réseau mobile et de l'équipement d'accès dédié, entre ledit terminal utilisateur et le réseau client privé, ladite connexion à distance étant entièrement gérée par le réseau mobile,
   sinon la requête est rejetée et l'accès au réseau client privé est refusé.

Selon un mode de réalisation de la présente invention, l'équipement d'accès dédié localisé chez le client correspond à une station de base d'une cellule de type femto ou micro correspondant au site client.

Selon un autre mode de réalisation de la présente invention, le réseau mobile est un réseau de troisième (3G) ou quatrième génération (4G).

Selon un mode de réalisation additionnel de la présente invention, l'équipement d'accès dédié attribue une adresse de protocole Internet au terminal utilisateur autorisé et implémente une fonction de translation d'adresse réseau pour établir la connexion.

Selon un mode de réalisation additionnel, l'équipement d'accès dédié supporte un protocole de configuration d'hôte dynamique et attribue une adresse de protocole Internet dynamique au terminal utilisateur.

Selon un mode de réalisation supplémentaire de la présente invention, la connexion à distance entre ledit terminal utilisateur et ledit réseau client privé est sécurisée par encryptage des données transmises de manière à assurer la confidentialité des données échangées par ladite connexion, notamment vis à vis du réseau mobile.

Selon un autre mode de réalisation de la présente invention, l'encryptage des données transmises est géré par un protocole de sécurité Internet.

Selon un mode de réalisation supplémentaire de la présente invention, l'établissement de la connexion sécurisée à distance comprend l'utilisation de certificats de type X.509.

Selon un mode de réalisation additionnel de la présente invention, le terminal utilisateur et l'équipement d'accès dédié interrogent le réseau mobile afin de confirmer l'authenticité des signatures utilisées durant la phase d'authentification de la connexion entre ledit terminal utilisateur et ledit équipement d'accès dédié.

Selon un autre mode de réalisation de la présente invention, la confirmation par le réseau coeur du réseau mobile de l'authenticité de la provenance des données échangées est réalisée par un serveur de souscripteur du réseau mobile ou par un serveur d'authentification, d'autorisation et de comptabilité.

L'invention concerne également un équipement d'accès dédié permettant de connecter un réseau client privé à un réseau mobile géré par un opérateur comprenant des moyens d'identification dudit équipement d'accès dédié au niveau du réseau mobile et des moyens configurés pour:
- recevoir une requête d'accès d'un terminal utilisateur au réseau client privé,
- établir une connexion sécurisée avec ledit réseau mobile géré par un opérateur,
- établir un chemin d'accès entre un terminal utilisateur rattaché au réseau mobile et le réseau client privé, ledit chemin d'accès étant géré par ledit réseau mobile afin de connecter ledit terminal utilisateur et ledit réseau client privé
- identifier le statut d'autorisation d'accès d'un terminal utilisateur au réseau client privé.

Selon un autre mode de réalisation de la présente invention, des fonctions du réseau de coeur du réseau mobile sont déportées dans ledit équipement afin de permettre un accès local au protocole Internet.

Selon un mode de réalisation additionnel de la présente invention, ledit équipement comprend également des moyens configurés pour établir une connexion sécurisée entre le terminal utilisateur rattaché au réseau mobile et le réseau client privé afin d'assurer la confidentialité des données échangées par ladite connexion.

Selon un mode de réalisation additionnel de la présente invention, ledit équipement comprend également des moyens configurés pour interroger le réseau mobile afin d'authentifier la provenance des signaux reçus dudit terminal utilisateur rattaché au réseau mobile.

L'invention concerne également un terminal utilisateur rattaché à un réseau mobile géré par un opérateur et dont l'utilisateur appartient à un réseau client privé comprenant des moyens d'identification dudit terminal utilisateur au niveau du réseau mobile et des moyens configurés pour:
- enregistrer ledit terminal utilisateur comme étant autorisé à accéder à un réseau client privé,
- transmettre une requête d'accès à un réseau client privé par l'intermédiaire d'un équipement d'accès dédié correspondant audit réseau client privé par l'intermédiaire du réseau mobile,
- établir une connexion sécurisée avec ledit réseau mobile géré par un opérateur,
- établir un chemin d'accès vers le réseau client privé via un équipement d'accès dédié dudit réseau client privé.

Selon un autre mode de réalisation de la présente invention, ledit terminal comprend également des moyens configurés pour établir une connexion sécurisée avec l'équipement d'accès dédié du réseau client privé afin d'assurer la confidentialité des données échangées par ladite connexion.

Selon un mode de réalisation supplémentaire de la présente invention, ledit terminal comprend également des moyens configurés pour interroger le réseau mobile afin d'authentifier la provenance des signaux reçus dudit équipement d'accès dédié connecté au réseau mobile.

L'invention concerne également un réseau mobile géré par un opérateur comprenant des moyens configurés pour
- créer un champ de souscription définissant le statut d'autorisation d'accès d'un terminal utilisateur à un réseau client privé au niveau de l'identification des terminaux utilisateurs,
- enregistrer le statut d'autorisation d'un terminal utilisateur à un réseau client privé,
- établir une connexion sécurisée avec un équipement d'accès dédié,
- établir une connexion sécurisée avec un terminal utilisateur,
- déterminer la correspondance entre un réseau client privé et un équipement d'accès dédié associé,
- déterminer si un terminal utilisateur est autorisé à accéder à un réseau client privé,
- établir un chemin d'accès entre le terminal utilisateur autorisé et le réseau client privé correspondant par l'intermédiaire de l'équipement d'accès dédié.

Selon un autre mode de réalisation de la présente invention, ledit réseau comprend également également des moyens configurés pour
- recevoir des demandes d'authentification de la provenance de signaux transmis par ledit réseau mobile,
- authentifier un équipement d'accès dédié ou un terminal utilisateur à partir des signaux émis par ledit équipement d'accès dédié ou ledit terminal utilisateur et transmis par ledit réseau mobile.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma d'une connexion entre un équipement utilisateur et un réseau client privé par l'intermédiaire d'un réseau mobile;
- la figure 2 représente un schéma des différentes étapes pour la mise en oeuvre de la présente invention;

Dans la description qui va suivre, on désigne de façon générale:
Le terme « réseau client privé » décrit un réseau privé (réseau domestique ou local d'un particulier ou d'une entreprise) connecté à un réseau public dont le réseau privé est client, c'est à dire auquel il est connecté et par lequel il peut souscrire à des services;
Le terme «équipement d'accès dédié» décrit un équipement privé d'abonné (« customer premises equipment » en anglais) situé chez le client et permettant de connecter un réseau client privé avec un réseau mobile géré par un opérateur.
Le terme «réseau mobile» décrit un réseau permettant des communications sans fil avec des terminaux mobiles, comme par exemple des réseaux cellulaires gérés par un opérateur.
Le terme «IP» correspond à l'acronyme anglais Internet Protocol et correspond au protocole Internet.
Le terme «PDN» correspond à l'acronyme anglais Packet Data Network et correspond à un réseau de données par paquets.
Le terme «DHCP» correspond à l'acronyme anglais Dynamic Host Configuration Protocol et correspond à un protocole de configuration d'hôte dynamique.

Les modes de réalisation de la présente invention concernent un procédé permettant à un utilisateur d'un réseau client privé de se connecter à distance audit réseau client privé par l'intermédiaire d'un réseau mobile. L'interface entre le réseau client privé et le réseau mobile étant gérée par un équipement d'accès dédié.

Le réseau client privé peut correspondre, par exemple, à un réseau d'entreprise ou à un réseau local d'un particulier et peut se limiter à un unique terminal fixe.

Le réseau mobile peut, par exemple, correspondre à un réseau de type troisième génération (3G) ou de type quatrième génération (4G aussi appelé « Long Term Evolution (LTE) » en anglais).

D'autre part, l'équipement d'accès dédié peut consister, par exemple, en une station de base d'une cellule de type femto ou micro correspondant au réseau client privé comme par exemple un noeud B évolué domestique (« Home Evolved Node B (HeNB) » en anglais).

Par ailleurs, la station de base (ou noeud B évolué domestique) peut fournir un accès IP local au réseau client privé (« local IP access » en anglais) et peut être installée par le client lui-même.

Ainsi, des terminaux mobiles dont les utilisateurs appartiennent au réseau client privé peuvent, lorsqu'ils sont situés à l'intérieur de ladite cellule femto ou micro, être connectés au réseau client privé et accéder aux données enregistrées sur ledit réseau client privé. Or, le réseau client privé étant connecté à un réseau mobile, l'idée de la présente invention est de permettre l'accès au réseau client privé à distance par l'intermédiaire du réseau mobile auquel à la fois, l'équipement d'accès dédié est connecté et le terminal mobile est rattaché.

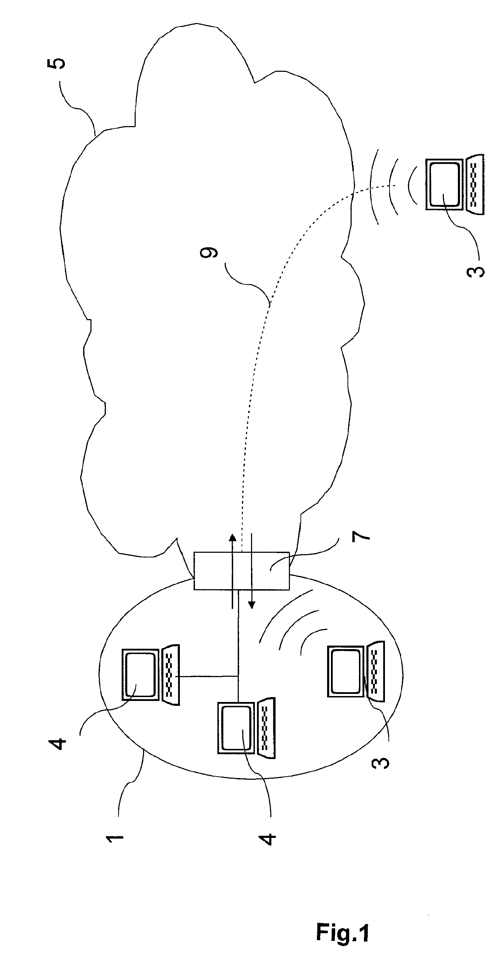

La figure 1 montre un schéma de la configuration proposée dans laquelle un réseau client privé 1 comprenant des terminaux utilisateurs (fixes 4 ou mobiles 3) est connecté à un réseau mobile 5 par l'intermédiaire d'un équipement d'accès dédié 7. L'un des terminaux mobiles 3 appartenant à un utilisateur du réseau client privé 1 se trouve à l'extérieur dudit réseau client privé 1, il est néanmoins rattaché au réseau mobile 5 ce qui lui permet de communiquer par l'intermédiaire dudit réseau mobile 5.

Ainsi, une connexion 9 peut être établie avec l'équipement d'accès dédié 7 afin de permettre audit terminal utilisateur 3 d'accéder à son réseau client privé 1.

Cependant, afin de limiter l'accès du réseau client privé 1 aux seuls utilisateurs autorisés et afin d'assurer la confidentialité des données transmises entre le terminal utilisateur 3 et le réseau client privé 1, des protocoles d'accès et de communication doivent être établis.

De plus, afin que la mise en place d'une telle connexion 9 se fasse de manière aisée pour l'utilisateur, ladite connexion est gérée de bout en bout par le réseau mobile 5.

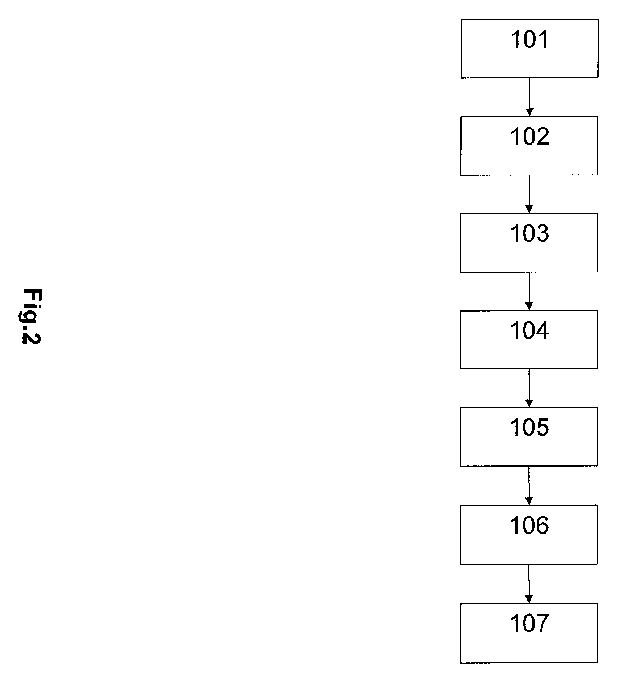

Les différentes étapes nécessaires aux modes de réalisation de la présente invention vont maintenant être décrits plus en détails à partir de la figure 2.

La première étape 101 correspond à l'enregistrement au niveau du réseau mobile 5 de l'équipement d'accès dédié 7. Cet enregistrement permet au réseau mobile 5 d'identifier l'équipement d'accès dédié 7 et de l'associer au réseau client privé 1 correspondant. Cet enregistrement peut se faire, par exemple, lors de l'installation et de la connexion au réseau mobile 5 de l'équipement d'accès dédié 7.

L'étape suivante 102 concerne la création d'un champ de souscription supplémentaire dans l'identification des terminaux utilisateurs 3 au niveau du réseau mobile 5. Ce champ correspond au statut des terminaux utilisateurs 3 concernant l'autorisation d'accès vis à vis d'au moins un réseau client privé auquel les terminaux 3 sont associés.

Ce champ supplémentaire permet au réseau mobile de connaître l'association entre un terminal utilisateur 3 et un réseau client privé 1. Lors de l'attachement d'un terminal 3 à un réseau mobile 5, l'information concernant l'autorisation d'accès à un réseau client privé 1 peut être implémentée au niveau du serveur de souscripteur du réseau mobile (« home subscriber server (HSS) » en anglais). Ainsi, en plus des données nécessaires à un accès IP local sur un équipement d'accès dédié 7, un drapeau (« flag » en anglais) peut être ajouté pour indiquer l'autorisation de l'accès à distance. Ce drapeau pouvant être détecté par la fonction de sélection de la passerelle PDN du réseau client privé 1 lorsque la connexion 9 avec ledit réseau client privé 1 est établie.

L'étape suivante 103 correspond à l'enregistrement de l'autorisation d'accès des terminaux utilisateurs mobiles 3 au réseau client privé 1 au niveau du réseau mobile 5. Cet enregistrement permettant de définir le statut d'autorisation du terminal mobile 3 au niveau du champ supplémentaire décrit précédemment.

Il est à noter qu'un terminal utilisateur 3 peut être associé à plusieurs réseaux clients privés 1, de même que plusieurs terminaux utilisateurs 3 peuvent être associés à un réseau client privé 1.

Lorsqu'un terminal utilisateur 3, situé à l'extérieur de son réseau client privé 1 et rattaché à son réseau mobile 5, désire se connecter à son réseau client privé 1, une requête est envoyée au réseau mobile 5 (étape 104). Cette requête peut, par exemple, correspondre à une activation d'un nom de point d'accès (« access point name (APN) » en anglais).

A la réception de cette requête, le réseau de coeur du réseau mobile 5 identifie d'une part le terminal utilisateur 3 ayant émis la requête et d'autre part le réseau client privé 1 faisant l'objet de la requête ainsi que l'équipement d'accès 7 correspondant (étape 105). Ces identifications permettent d'authentifier l'autorisation d'accès du terminal mobile 3 vis à vis du réseau client privé 7 pour lequel l'accès est demandé (étape 106).

Une fois l'authentification effectuée par le réseau mobile 5, la connexion 9 peut alors être établie entre le terminal mobile 3 et le réseau client privé 1 par la création d'un chemin d'accès entre le terminal mobile 3 et le réseau client privé 1 par l'intermédiaire du réseau mobile 5 et de l'équipement d'accès dédié 7 (étape 107).

Pour cela, différentes configurations sont possibles:
- selon un mode de réalisation, l'équipement d'accès dédié 7 peut, par exemple, attribuer une adresse IP au terminal mobile 3 et implémenter une fonction de translation d'adresse réseau (« Network Address Translation (NAT) » en anglais) permettant de convertir l'adresse IP publique transmise par le réseau mobile 5 en une adresse privée correspondant au réseau client privé 1 et inversement afin de permettre l'échange des données entre le terminal utilisateur 3 et le réseau client privé 1. Dans ce cas, l'adresse attribuée correspond à une adresse fixe d'un espace d'adressage propre à l'équipement d'accès dédié 7.
- Selon un second mode de réalisation, l'équipement d'accès dédié 7 peut supporter un serveur DHCP (ou éventuellement une fonction relais DHCP vers un serveur DHCP du réseau client privé 1), dans ce cas, soit l'adresse IP attribuée est une adresse dynamique du réseau client privé 1, soit une fonction de translation d'adresse réseau est également implémentée et l'adresse IP dynamique attribuée est une adresse d'un espace d'adressage propre à l'équipement d'accès dédié 7.

Selon un troisième mode de réalisation, l'équipement d'accès dédié 7 est configuré avec une adresse fixe du réseau client privé 1 et attribue cette adresse fixe au terminal mobile 3.

Dans tous les cas, l'équipement d'accès dédié 7 doit être configuré pour accepter les connexions entrantes et agit comme une passerelle (par exemple une passerelle PDN) qui reçoit les paquets et les route vers leur destination.

Ainsi, la connexion 9 entre le terminal mobile 3 et le réseau client privé 1 est entièrement gérée par le réseau mobile, ce qui permet d'obtenir une connexion sécurisée sans qu'il ne soit nécessaire d'installer de logiciel pour établir un réseau privé virtuel (« virtual private network (VPN) » en anglais).

Par ailleurs, la connexion 9 étant sécurisée par le réseau mobile 5 géré par un opérateur, certains utilisateurs peuvent être sceptiques quant à l'intégrité de leur opérateur. Ainsi, selon un autre mode de réalisation, la connexion 9 est encryptée de bout en bout afin d'éviter toute possibilité de piratage de l'opérateur assurant la connexion 9. Pour cela, un protocole de sécurité (par exemple de type IPsec) basé sur l'utilisation de certificats, par exemple de type X.509, permettant aux points de terminaison (« end points » en anglais), c'est à dire le terminal mobile 3 et l'équipement d'accès dédié (par exemple HeNB) 7, d'authentifier la provenance des données reçues à partir d'une signature associée à ces données. Pour cela, un module IPsec client peut être implémenté au niveau du terminal utilisateur 3 et un serveur IPsec peut être implémenté au niveau du noeud B évolué domestique 7, le protocole IPsec étant requis par le serveur IPsec en cas de connexion à distance au réseau client privé.

Selon un mode de réalisation supplémentaire, afin d'éviter des opérations de configuration de la connexion sécurisée de bout en bout, le réseau mobile peut être utilisé afin de fournir un serveur d'authentification, d'autorisation et de comptabilité (« authentication, authorization and accounting (AAA) server » en anglais). Dans ce cas, lorsque l'un des points de terminaison de la connexion reçoit des données comprenant une signature correspondant à un certificat privé, le point de terminaison peut interroger le serveur d'authentification du réseau mobile 5 afin de confirmer la provenance des données. Un protocole d'authentification extensible avec échange de signature Internet (« Extensible Authentication Protocol-Internet Key Exchange (EAP-IKEv2) » en anglais) adapté pour l'authentification IPsec peut par exemple être utilisé. Dans ce cas, le terminal mobile 3 peut utiliser son identité souscripteur mobile international (« international mobile subscriber identity (IMSI) » en anglais) comme mot de passe et le noeud B évolué domestique 7 utiliser son adresse IP comme mot de passe puis ils peuvent interroger l'entité de management de mobilité (« mobility management entity (MME) » en anglais) du réseau mobile 5 afin de confirmer l'identité du point de terminaison ayant émis les données reçues.

Les modes de réalisation de la présente invention permettent donc à un opérateur d'un réseau mobile 5 de proposer à ses clients de se connecter à distance à leur réseau client privé 1 par l'intermédiaire du réseau mobile 5. Ainsi, le client peut accéder à son réseau privé 1 depuis n'importe quel endroit couvert par le réseau mobile 5, ou par un réseau mobile interconnecté avec le réseau mobile 5 (« roaming » en anglais), de manière sécurisée et sans qu'il lui soit nécessaire d'installer de logiciel puisque la connexion 9 est gérée par le réseau mobile 5.

## Revendications

1. Procédé de gestion des transmissions de données entre un terminal utilisateur (3) connecté à un réseau mobile (5) géré par un opérateur et un réseau client privé (1) connecté audit réseau mobile (5) par l'intermédiaire d'un équipement d'accès dédié (7) localisé chez le client, ledit procédé comprenant les étapes suivantes:
- identification par le réseau de coeur du réseau mobile (5) d'un équipement d'accès dédié (7) comme étant rattaché au réseau client privé (1) correspondant (étape 101),
- création d'un champ de souscription supplémentaire dans l'identification des terminaux utilisateurs (3) au niveau du réseau de coeur du réseau mobile (5) définissant le statut d'autorisation d'accès d'un terminal utilisateur (3) à un réseau client privé (1) (étape 102),
- enregistrement d'au moins un terminal utilisateur (3) du réseau client privé (1), ledit terminal (3) étant rattaché au réseau mobile (5), comme étant autorisé à l'accès dudit réseau client privé (1), ledit terminal utilisateur (3) enregistré ayant alors un statut d'autorisation d'accès vis à vis dudit réseau client privé (1) défini comme autorisé (étape 103),
lorsqu'un terminal utilisateur (3) requiert un accès à distance à un réseau client privé (1) (étape 104),
- vérification par le réseau de coeur du réseau mobile (5) d'au moins un identifiant de l'équipement d'accès dédié (7) correspondant audit réseau client privé (1) pour lequel l'accès est demandé et d'au moins un identifiant du terminal utilisateur (3) ayant émis la requête d'accès (étape 105),
- vérification par le réseau de coeur du statut d'autorisation d'accès du terminal identifié vis à vis du réseau client privé correspondant à la requête (étape 106),
si le statut d'autorisation d'accès du terminal (3) est défini comme autorisé,
- établissement d'une connexion (9) à distance, par l'intermédiaire du réseau mobile (5) et de l'équipement d'accès dédié (7), entre ledit terminal utilisateur (3) et le réseau client privé (1), ladite connexion (9) à distance étant entièrement gérée par le réseau mobile (5) (étape 107),
sinon la requête est rejetée et l'accès au réseau client privé est refusé.

2. Procédé de gestion selon la revendication 1, dans lequel l'équipement d'accès dédié (7) localisé chez le client correspond à une station de base d'une cellule de type femto ou micro correspondant au site client.

3. Procédé de gestion selon la revendication 3 dans lequel l'équipement d'accès dédié (7) attribue une adresse de protocole Internet au terminal utilisateur (3) autorisé et implémente une fonction de translation d'adresse réseau pour établir la connexion (9).

4. Procédé de gestion selon la revendication 3 ou 4 dans lequel l'équipement d'accès dédié (7) supporte un protocole de configuration d'hôte dynamique et attribue une adresse de protocole Internet dynamique au terminal utilisateur (3).

5. Procédé de gestion selon l'une des revendications précédentes, dans lequel la connexion à distance entre ledit terminal utilisateur et ledit réseau client privé est sécurisée par encryptage des données transmises de manière à assurer la confidentialité des données échangées par ladite connexion (9), notamment vis à vis du réseau mobile (5).

6. Procédé de gestion selon l'une des revendications 6 à 8 dans lequel le terminal utilisateur (3) et l'équipement d'accès dédié (7) interrogent le réseau mobile (5) afin de confirmer l'authenticité des signatures utilisées durant la phase d'authentification de la connexion entre ledit terminal utilisateur (3) et ledit équipement d'accès dédié (7).

7. Equipement d'accès dédié (7) permettant de connecter un réseau client privé (1) à un réseau mobile (5) géré par un opérateur comprenant des moyens d'identification dudit équipement d'accès dédié (7) au niveau du réseau mobile (5) et des moyens configurés pour:
- établir une connexion sécurisée avec ledit réseau mobile (5) géré par un opérateur,
- recevoir une requête d'accès d'un terminal utilisateur (3) au réseau client privé,
- établir un chemin d'accès entre un terminal utilisateur (3) rattaché au réseau mobile et le réseau client privé, ledit chemin d'accès étant géré par ledit réseau mobile (5) afin de connecter ledit terminal utilisateur (3) et ledit réseau client privé (1)
- identifier le statut d'autorisation d'accès d'un terminal utilisateur (3) au réseau client privé (1).

8. Equipement (7) selon la revendication 11 ou 12 comprenant des moyens configurés pour établir une connexion (9) sécurisée entre le terminal utilisateur (3) rattaché au réseau mobile (5) et le réseau client privé (1) afin d'assurer la confidentialité des données échangées par ladite connexion (9).

9. Terminal utilisateur (3) rattaché à un réseau mobile (5) géré par un opérateur et dont l'utilisateur appartient à un réseau client privé (1) comprenant des moyens d'identification dudit terminal utilisateur (3) au niveau du réseau mobile (5) et des moyens configurés pour:
- enregistrer ledit terminal utilisateur (3) comme étant autorisé à accéder à un réseau client privé (1),
- transmettre une requête d'accès à un réseau client privé (1) par l'intermédiaire d'un équipement d'accès dédié (7) correspondant audit réseau client privé par l'intermédiaire du réseau mobile (5),
- établir une connexion sécurisée avec ledit réseau mobile (5) géré par un opérateur,
- établir un chemin d'accès vers le réseau client privé (1) via un équipement d'accès dédié (7) dudit réseau client privé.

10. Terminal utilisateur (3) selon la revendication 15 comprenant des moyens configurés pour établir une connexion sécurisée avec l'équipement d'accès dédié (7) du réseau client privé (1) afin d'assurer la confidentialité des données échangées par ladite connexion.

11. Terminal utilisateur (3) selon la revendication 16 comprenant des moyens configurés pour interroger le réseau mobile (5) afin d'authentifier la provenance des signaux reçus dudit équipement d'accès dédié (7) connecté au réseau mobile (5).

12. Réseau mobile géré par un opérateur comprenant des moyens configurés pour
- créer un champ de souscription définissant le statut d'autorisation d'accès d'un terminal utilisateur (3) à un réseau client privé (1) au niveau de l'identification des terminaux utilisateurs,
- enregistrer le statut d'autorisation d'un terminal utilisateur (3) à un réseau client privé (1),
- établir une connexion sécurisée avec un équipement d'accès dédié (7),
- établir une connexion sécurisée avec un terminal utilisateur (3),
- déterminer la correspondance entre un réseau client privé (1) et un équipement d'accès dédié (7) associé,
- déterminer si un terminal utilisateur (3) est autorisé à accéder à un réseau client privé (1),
- établir un chemin d'accès entre le terminal utilisateur (3) autorisé et le réseau client privé (1) correspondant par l'intermédiaire de l'équipement d'accès dédié (7).

13. Réseau mobile selon la revendication 18 comprenant également des moyens configurés pour
- recevoir des demandes d'authentification de la provenance de signaux transmis par ledit réseau mobile (5),
- authentifier un équipement d'accès dédié (7) ou un terminal utilisateur (3) à partir des signaux émis par ledit équipement d'accès dédié (7) ou ledit terminal utilisateur (3) et transmis par ledit réseau mobile (5).
